Europäisches Patentamt

European Patent Office

Office européen des brevets

(19)

(11) Veröffentlichungsnummer: **0 355 357**
**A2**

(12) **EUROPÄISCHE PATENTANMELDUNG**

(21) Anmeldenummer: **89112516.3**

(22) Anmeldetag: **08.07.89**

(51) Int. Cl.⁴: **B60G 17/08 , F16F 9/46 , B60G 17/015**

(30) Priorität: **13.08.88 DE 3827538**

(43) Veröffentlichungstag der Anmeldung:
**28.02.90 Patentblatt 90/09**

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Karnopp, Dean, Prof**
**1217 Stanford Place**
**Davis, CA 95616(US)**

(54) **Vorrichtung zur Dämpfung federnder Rad-Aufhängungssysteme bei Fahrzeugen.**

(57) Bei einer Vorrichtung zur Dämpfung federnder Rad-Aufhängungssysteme bei Fahrzeugen u. dgl. mit einem Kolben/Zylinderaggregat werden momentane, dynamische Fahrbedingungen von Sensoren erfaßt und dienen zur Durchflußsteuerung von Dämpferventilen, wobei die jeweils wirksame Dämpfungskraft so gesteuert ist, daß sich passive und aktive Dämpfungskraftkomponenten ergeben und dann, wenn aufgrund des momentanen Bewegungsablaufs eine äußere Energiezuführung erforderlich ist, die bestehende Dämpfungskraft im wesentlichen zu Null gemacht wird (semi-aktive Dämpfung). Es sind für Zug- und Druckstufe getrennte Einflußmöglichkeiten auf das gesteuerte Druckmittel vorgesehen, bestehend aus der Reihenschaltung von zwei getrennten Ventilen (15, 16) jeweils für jede Bewegungsrichtung (Zug/Druckstufe), wobei bei dann insgesamt vier vorhandenen Ventilen sowohl in der Zug- als auch in der Druckstufe jeweils ein den aktiven Dämpfungsanteil bestimmendes Ventil und ein mit diesem in Reihe liegendes, den passiven Dämpfungsanteil bestimmendes Ventil angeordnet sind. Die beiden Ventile für den passiven und die beiden Ventile für den aktiven Dämpfungsanteil sind jeweils von außen verstellbar.

Fig.1

## Vorrichtung zur Dämpfung federnder Rad-Aufhängungssysteme bei Fahrzeugen

### Stand der Technik

Die Erfindung betrifft eine Vorrichtung zur Dämpfung federnder Rad-Aufhängungssysteme bei Fahrzeugen nach dem Oberbegriff des Anspruchs 1. Ein bekanntes Dämpfungssystem dieser Art (DE-OS 35 24 862) ist zur Erzielung eines sogenannten semi-aktiven Federungskonzepts so ausgebildet, daß eine Aufteilung in passive und aktive Dämpfungsanteile vorgenommen wird, wobei ein aktiver Dämpfungsanteil sozusagen dadurch simuliert wird, daß immer dann, wenn aufgrund des momentanen Federungs- bzw. Dämpfungsablaufs die Zuführung einer äußeren Energie, also die aktive Beeinflussung des Federungsvorgangs erforderlich wäre, bestehende Dämpfungsmöglichkeiten nach Vorzeichen und Betrag so gesteuert werden, daß die Fehlfunktion ein Minimum wird; mit anderen Worten, die einwirkenden Dämpfungskräfte werden sowohl für die Zug- als auch für die Druckstufe eines normalen Stoßdämpfers oder Federbeins dann, wenn dieses die schnelle Einleitung aktiver Druckenergien erfordert, im wesentlichen zu Null gemacht, beispielsweise dadurch, daß die entsprechenden Dämpfungsventile voll oder je nach den angestrebten Erfordernissen teilweise geöffnet werden.

Ein solches semi-aktives Federungskonzept macht Gebrauch von den möglichen Vorteilen der sogenannten passiven Federung, bei der zur Beeinflussung schnell ablaufender Dämpfungs- oder Federungsvorgänge keine in diesem Sinne dann äußere Energie zugeführt wird, sowie von der sogenannten aktiven Federung, bei der aus einer unabhängigen Energiequelle, beispielsweise einer hydraulischen Pumpe beliebig Energie sozusagen von außen dem Federungsbereich zugeführt wird, und vereinigt die Vorteile beider.

Der Erfindung liegt die Aufgabe zugrunde, auf der Grundlage der bekannten semi-aktiven Dämpfungssteuerung bei federnden Rad-Aufhängungssystemen für Fahrzeuge neue, integrierte und insbesondere klein bauende Strukturen zu schaffen, die hinreichend schnell reagieren und in der Lage sind, unmittelbar in jeder einzelnen Stoßdämpfereinheit oder in jedes Federbein eingebaut bzw. an dieses angebaut zu werden.

### Vorteile der Erfindung

Die Erfindung löst diese Aufgabe mit den kennzeichnenden Merkmalen des Hauptanspruchs und hat den Vorteil, daß die gewünschte Dämpfungssteuerung jeweils für Druck- und Zugstufe getrennt durch zwei Ventilgruppen ermöglicht wird, die so angesteuert, also in ihrem Durchlaßquerschnitt verändert werden, daß passive und aktive Dämpfungsanteile eine getrennte Einstellung erfahren.

Dabei ist von besonderem Vorteil, daß die beiden die passive und die aktive Dämpfung bestimmenden Ventile gleichzeitig Doppelventile sind, die für die Zug- und die Druckstufe getrennt die Einstellung der Durchlaßquerschnitte für diese gleichzeitig vornehmen.

Die verwendeten Ventile sind Rotationsventile, deren Durchlaßquerschnittseinstellung durch relative Verdrehung zu stationären Teilen erfolgt, wobei die jeweils hintereinander geschalteten Ventile für die passive Dämpfungskraftkomponente und die aktive Dämpfungskraftkomponente ineinandergeschachtelt und vorzugsweise konzentrisch so angeordnet sein können, daß der gesamte Ventilbereich im Kolben eines stoßdämpferartig ausgebildeten Dämpfungselements oder in der Kolbenstange angeordnet werden kann; durch die stationäre, wenn auch flexible Befestigung der Kolbenstange am Aufbau ist es dann möglich, die Steuerkräfte, die für die Betätigung der passiven und aktiven Dämpfungskraftventile erforderlich sind, in den Bereich des Kolbens bzw. der Kolbenstange einzulei ten, vorzugsweise durch relative Verdrehung von Hohlwellen zueinander.

Von besonderem Vorteil ist ferner, daß zusätzlich zu den aus äußeren Steuerungskräften abgeleiteten Rotationsbewegungen für die Ventile der eigentliche Ventilkörper, der die Durchlaßsteuerung bewirkt, derart federnd, beispielsweise zwischen Scheibenfedern beliebigen Aufbaus gehalten ist, daß er durch die jeweiligen einwirkenden Druckverhältnisse veranlaßt zusätzlich noch eine mehr oder weniger starke Axialbewegung durchführen kann, die ergänzend die Durchlaßsteuerung der Ventile beeinflußt, und zwar in diesem speziellen Fall dann unsymmetrisch.

Durch die in den Unteransprüchen aufgeführten Maßnahmen sind vorteilhafte Weiterbildungen und Verbesserungen der im Hauptanspruch angegebenen Vorrichtung zur Dämpfung federnder Rad-Aufhängungssysteme möglich. So können die beiden konzentrisch zueinander angeordneten Doppelventile aus einem inneren, für die aktive Dämpfungskraftkomponente zuständigen Rotationsventil bestehen, dessen äußerer Zylindermantel eine sich umlaufend in der Höhe verändernde Kontur aufweist, so daß mit stetiger Änderung in einem die Zylinderform des Ventilkörpers umgebenden Mantel befindliche Öffnungen in ihrem Querschnitt freigegeben oder überdeckt werden, während sich nach außen an den inneren stationären Teil anschließend ein weiteres Doppelventil in Form einer schürzenartig nach unten hängenden Zylinderwandung ausgebildet sein kann, die Querbohrungen aufweist, die je nach eingenommener Drehpo sition mehr oder weniger mit entsprechend beidseitigen Durchlaßöffnungen fluchten.

## Zeichnung

Ausführungsbeispiele der Erfindung sind in der Zeichnung dargestellt und werden in der nachfolgenden Beschreibung näher erläutert. Es zeigen:

Fig. 1 ein Ausführungsbeispiel des Ventilbereichs einer semi-aktiven Dämpfung im Querschnitt, wobei dieser Ventilbereich im Kolben einer stoßdämpferartig ausgebildeten Einrohr-Struktur angeordnet ist und die Ventilbetätigung über Hohlwellen erfolgt, die in der Kolbenstange geführt sind;

Fig. 2 zeigt schematisiert im Querschnitt mit zugeordnetem, ebenfalls schematisiert ausgebildeten Stoßdämpferteil den Ventilbereich in einer alternativen Ausgestaltung, mit einem ersten Drehventil für die Bestimmung der passiven Dämpfungskraftkomponente und einem asymmetrisch mit Bezug auf die Zug- und Druckstufe reagierenden Doppeltellerventil für die Bestimmung der aktiven Dämpfungskraftkomponente;

Fig. 3 zeigt eine Ausführungsform einer nach Art eines McPherson-Federbeins ausgebildeteten Dämpfungseinheit, bei der der Ventilbereich außerhalb des Kolben/Zylinderaggregatsbereichs, jedoch innerhalb der aus diesem herausgeführten Kolbenstange angeordnet ist;

Fig. 4 zeigt, ebenfalls im Querschnitt schematisiert ein McPherson-Federbein mit Rückschlagventil und Druckbegrenzungsventil im Kolbenbereich sowie mit Längs- und Querkanälen in der Kolbenstange, die zu einem außerhalb oder unmittelbar an der Kolbenstange angeordneten Ventilbereich führen, der so ausgebildet sein kann, wie er in Fig. 2 oder in der nachfolgenden Figur 5 dargestellt ist;

Fig. 5 zeigt demnach schematisiert einen Ventilbereich im Schnitt, der einem entsprechend semi-aktiv ausgebildeten McPherson-Federbein zugeordnet sein kann zur Befestigung am Fahrzeugaufbau, wobei der Druckmittelfluß durch Kanäle in der hohlen Kolbenstange erfolgt, während die

Fig. 6 eine alternative Ausführungsform eines Ventilbereichs mit ebenfalls zwei zueinander konzentrisch angeordneten Ventilstrukturen darstellt und die

Fig. 7 und die Fig. 8 Querschnitte zeigen längs der Linien VII bzw. VIII in Fig. 6.

## Beschreibung der Ausführungsbeispiele

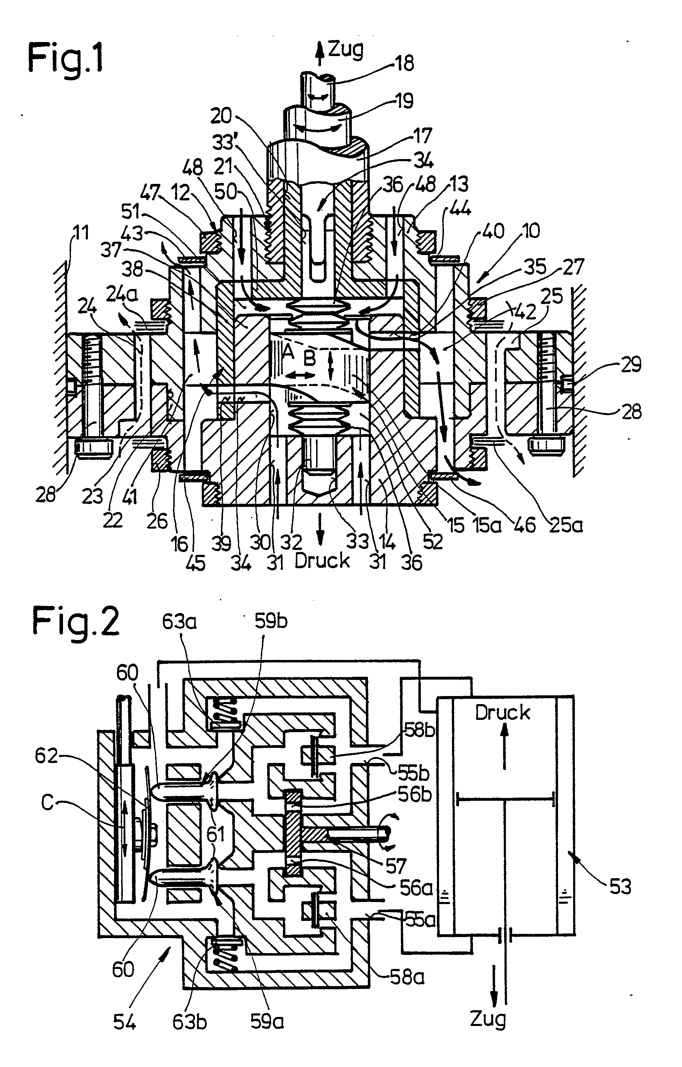

In Fig. 1 ist ausschnittartig hauptsächlich der Kolben 10 einer stoßdämpferartigen Struktur, beispielsweise eines Einrohrstoßdämpfers gezeigt, von dem nur teilweise die Ringwandung des den Kolben aufnehmenden Zylinders bei 11 angedeutet ist.

Im Dämpferkolben 10 ist die gesamte die semi-aktive Dämpfungskrafterzeugung bewirkende Ventileinheit 12 integriert, wobei aus Gründen eines erleichterten Zusammenbaus der Kolben aus einem oberen, etwa umgekehrt schüsselartig ausgebildeten, außen und innen abgetreppten ersten Gehäuseteil 13 und einem unteren, in etwa ähnlich ausgebildeten, ebenfalls eine äußere abgetreppte Struktur · aufweisenden Gehäuseteil 14 besteht. Oberer und unterer Gehäuseteil 13 und 14 weisen eine Vielzahl aufeinander ausgerichteter und daher entsprechend fluchtender Durchlaßkanäle, Ringwandungen und ringförmige Paßvorsprünge auf, auf die weiter unten noch genauer eingegangen wird; das Hauptaugenmerk bei der in Fig. 1 gezeigten Ventileinheit ist aber darauf zu richten, daß zueinander konzentrisch ein inneres bzw. erstes, in seiner Funktion als Doppelventil ausgebildetes Ventil 15 und dieses umgebend ein zweites, ebenfalls als Doppelventil wirkendes Ventil 16 vorgesehen sind, die beide durch in der am Kolben 10 festgemachten Kolbenstange 17 verlaufende drehbare Verlängerungen, die im folgenden als Drehwellen bezeichnet werden, betätigt sind. Die innere Drehwelle 18 dient der Betätigung des ersten Doppelventils 15, welches seinerseits der geregelten oder gesteuerten Einstellung der aktiven Dämpfungskraftkomponente dient, während die innere Drehwelle 18 umgebende hohle äußere Drehwelle 19 das zweite Doppelventil 16 betätigt zur Einstellung der passiven Dämpfungskraftkomponente. Beide Drehwellen 18 und 19 sind in einer Bohrung 20 der Kolbenstange 17 konzentrisch geführt und gelagert, wobei die Kolbenstange 17 am oberen Gehäuseteil 13 fest gemacht, vorzugsweise, wie bei 21 angedeutet, in dieses eingeschraubt ist.

An dieser Stelle sei darauf hingewiesen, daß die im folgenden häufiger verwendeten Begriffe einer semi-aktiven Dämpfung mit passiven und aktiven Dämpfungskraftkomponenten im einzelnen erläutert ist in der eingangs schon genannten DE-OS 35 24 862 der gleichen Anmelderin, so daß die Bekanntheit dieser Grundbegriffe und deren Verknüpfung zur Erzielung optimaler Dämpfungswirkungen bei sich zueinander relativ bewegenden Körpern, speziell federnder Rad-Aufhängungssysteme bei Fahrzeugen (Rad/Achse ./. Fahrzeugaufbau) im folgenden vorausgesetzt wird.

Der Aufbau der Ventileinheit 12 innerhalb des oberen und unteren Kolbengehäuseteils 13 und 14 wird im folgenden im einzelnen genauer erläutert. Der obere Gehäuseteil 13 hat, von außen nach innen gesehen, einen nach unten vorspringenden Ringpaßvorsprung 22, der in einer entsprechenden Ringausnehmung 23 des unteren Kolbens- bzw. Gehäuseteils 14 sitzt. Nach außen weisen beide hier noch scheibenartig ausgebildete obere und untere Gehäuseteile zueinander fluchtende Durchlässe 24 und 25 auf, die jeweils in einer Richtung als Rückschlagventile wirken, wozu entsprechende federnde Ringbleche 24a, 25a, die die Ventilkörper bilden, die Durchlässe 24 und 25 jeweils auf der einen bzw. auf der anderen Seite überdeckend, angeordnet und beidseitig von aufgeschraubten Spannringen 26, 27 gehalten sind. Hierdurch ist ein Druckmittelfluß längs der gestrichelt verlaufenden Pfeillinien in der einen oder anderen Richtung bei Zug- oder Druckeinwirkung und entsprechender Höhe des einwirkenden Drucks möglich, nämlich dann, wenn der Druck hinreichend groß ist, um die Dichtlamellen aufzudrücken.

Die beiden oberen und unteren Gehäuseteile 13 und 14 können durch ganz außen vorgesehene,- (gleichmäßig) über den Umfang verteilte Schrauben 28 oder sonstige Befestigungsmittel miteinander verbunden sein. Eine Dichtung ist bei 29 eingelegt.

Der untere Gehäuseteil 14 nimmt den Ventilkörper 15a des ersten Doppelventils 15 (für die aktive Dämpfungskomponente) in einer inneren Bohrung 30 auf, in die von unten (axiale) Einlaßkanäle 31 führen, die insofern Einlaßdruckkanäle darstellen. Der Ventilkörper 15a ist von allgemein zylindrischer Gestalt und sitzt auf der inneren Drehwelle 18 bzw., wie beim dargestellten Ausführungsbeispiel, auf einer Drehachse 32, die beidseitig im Kolben 10 gelagert ist, nämlich nach unten in einer Bohrung 33 im unteren Gehäuseteil 14 und nach oben in der Bohrung 33 der äußeren Drehwelle 19. An dieser Stelle kann durch eine axiale Kupplung 34, die aus einer einfachen ineinandergesteckten Drehmitnahme aus unrundem Zapfen und diesen aufnehmende Ausnehmung bestehen kann, die Drehmitnahme der den inneren Ventilkörper 15a tragenden Drehachse 32 erfolgen. Der innere Ventilkörper 15a ist von allgemein zylindrischer Form, so daß er in der ihn aufnehmenden Bohrung 30 des unteren Gehäuseteils 14 bündig sitzt; die zylindrische Außenkontur des inneren Ventilkörpers 15a ist jedoch höhenversetzt, verläuft also wie in der Zeichnung gezeigt schräg von oben nach unten in der Zeichenebene und entsprechend umlaufend um die Zylinderwandung, wie auf der Rückseite gestrichelt dargestellt, so daß ein solcher Ventilkörper 15a in der Lage ist, bei Durchführung einer Drehbewegung entweder in die innere Bohrung 30 des unteren Gehäuseteils in verschiedener Höhe einmündende Querkanäle 34 bzw. 35 zu verschließen oder freizugeben. Auf diese Weise bildet der innere Ventilkörper 15a mit diesen quer einmündenden Kanälen 34, 35 Ventilmechanismen aus. Dabei münden bei dem dargestellten Ausführungsbeispiel zwei Querkanäle in die innere Bohrung 30 ein, die jeweils, worauf noch eingegangen wird, das Druckmittel (Hydrauliköl) getrennt für Druckstufe bzw. Zugstufe transportieren. Somit stellt das innere Ventil 15 ein Doppelventil dar, welches bei Betätigung gleichzeitig die beiden Teilventile öffnet oder schließt. Dies kann symmetrisch oder asymmetrisch geschehen und hängt, wie ohne weiteres einzusehen, von der jeweiligen Struktur und Form der Zylinderfläche des inneren Ventilkörpers 15a bzw. von dessen "Höhenschlag" ab.

Eine weitere, besonders bevorzugte Ausgestaltung dieses inneren Doppelventils 15 besteht darin, daß der eigentliche innere Ventilkörper 15a auf seiner Drehachse 32 axial verschieblich gelagert ist und beidseitig über Tellerfedern oder Scheibenfedern 36 in der normalen axialen Mittenposition vorgespannt ist. Hierdurch erhält der Ventilkörper 15a die Gelegenheit, sich rotatorisch entsprechend dem Doppelpfeil A -durch Einleitung einer willkürlichen Steuerbewegung von außen - sowie in axialer Richtung entsprechend Doppelpfeil B - willkürlich je nach einwirkenden Druckverhältnissen - zu bewegen, wobei in beiden Fällen eine Durchlaßsteuerung der Querkanäle notwendigerweise resultiert.

Die gleichen Querkanäle 34, 35, die nach innen Ventilfunktionen für das innere Doppelventil 15 übernehmen, übernehmen nach außen, also an ihren radialen äußeren Endbereichen Ventilfunktionen für das äußere Doppelventil 16.

Hierzu ist der erhabene stationäre Ringvorsprung 37, der sich vom unteren Gehäuseteil 14 nach oben erstreckt und in seinem Inneren die Bohrung 30 für den inneren Ventilkörper 15a bildet, außen von einem topfartigen äußeren Ventilkörper 38 umgeben, der auf den unterschiedlichen Höhen der stationären Querkanäle 34, 35 Queröffnungen 39, 40 aufweist, die je nach der von der Zylinderwandung des äußeren Ventilkörpers 38 eingenommenen Drehposition mit den Querkanälen 34, 35 mehr oder weniger fluchten, so daß sich den ersten (inneren) Ventilen nachgeschaltet zweite (äußere) Ventile ergeben; letztere sind von der äußeren Drehwelle 19 in ihrem Durchlaßverhalten gesteuert.

Außerhalb der zylindrischen Ringwandung des äußeren Ventilkörpers 38 münden die Kanäle dann in beidseitige, über den Umfang der Ventileinheit gesehen natürlich gegeneinander abgetrennte Räume 41, 42, die nach oben und unten von deckelartigen Rückschlagventilen 43, 44, 45, 46 verschlossen sind. Dabei können die Rück schlagventile 43, 44 von einer gemeinsamen (elastischen) Ringfläche gebildet sein, die auf den entsprechenden äußeren abgetreppten Vorsprung am oberen Gehäuseteil 13 aufgelegt und mittels eines Schraubringes 47 gehalten ist; das gleiche trifft sinngemäß für die unteren Rückschlagventile 45 und 46 zu.

Der äußere topfartige Ventilkörper 38 geht im übrigen nach oben verjüngend in die äußere Drehwelle 19, falls gewünscht, auch einstückig über, wobei sich der Gesamtaufbau schließlich noch durch weitere, radial innen liegende Einlaßkanäle 48, 49 vervollständigt, die den oberen Gehäuseteil 13 zunächst angrenzend zum eingeschraubten Kolbenstangenbereich axial durchsetzen und hier auch auf stets offene, daher radial bogenförmig verlaufende Durchtrittskanäle treffen, die in der horizontalen Ringfläche des Bodenteils 50 des sich drehenden Ventilkörpers 38 liegen.

Die unteren axial beidseitig zunächst zum inneren und dann zum äußeren Doppelventil führenden Einlaßkanäle 31 und 48 treffen ebenfalls oberhalb und unterhalb des inneren Ventilkörpers 15a auf Freiräume 51, 52 und treten von dort erst durch die verschiedenen, in Reihe liegenden Ventilöffnungen des inneren und äußeren Doppelventils, bevor sie in die äußeren Freiräume 41, 42 gelangen, von wo sie dann über die Rückschlagventile 43, 44, 45, 46 zur jeweils anderen Seite geführt sind.

Der Funktionsablauf bei einer solchen, im Kolben 10 etwa eines Stoßdämpfers integrierten Ventileinheit ist dann so, daß sowohl die Druck-Zug- als auch die aktiv-passiv-Funktionen separat kontrolliert und gesteuert werden können, so daß es möglich ist, die Anforderungen an das Frequenzverhalten der Betätigungsglieder zu reduzieren; dabei benötigt man aufgrund der variablen, durch Drehbewegungen veränderbaren Durchlaßöffnungssteuerungen nur geringe Betätigungskräfte, da hierdurch auftretenden Druckkräften praktisch nicht entgegengearbeitet zu werden braucht.

Entsprechende flexible Elemente im Bereich der Rückschlagventile vergrößern den Druckbereich und reduzieren so die Progressivität im Ansprechverhalten und begrenzen die maximal auftretenden Kräfte.

Besonders vorteilhaft und wesentlich ist die neuartige Konzeption des inneren Drehventils, welches die aktive Dämpfungskraftsteuerung übernimmt und, soweit gewünscht, eine rotatorisch unsymmetrisch Flächenmodulation für den Aufbau von Dämpfungskräften für die Zug- und Druckstufe kombiniert mit einer durch Federkraft kontrollierten Axialbewegung (des inneren Ventilkörpers), wodurch das progressive Ansteigen der Dämpfungskräfte reduziert und in Grenzen gehalten werden kann.

Die Grundfunktion ist so, daß bei Bewegung des Kolbens 10 in Druckrichtung, also in der Zeichenebene der Fig. 1 nach unten entsprechend verdrängtes Druckmittel durch die Kanäle 31 zunächst zum inneren Ventilkörper 15a und durch die von diesem bereitgestellten (unteren) Ventildurchlässe je nach Art der aktiven Dämpfungskraftbeeinflussung durch den Querkanal 34 zum sich daran anschließenden äußeren Ventilbereich der passiven Dämpfungskraftbeeinflussung, nämlich der Öffnung 39 im äußeren Ventilkörper 38 mit dem Querkanal 34 fließt und schließlich in den hier in der Zeichnungsebene der Fig. 1 linken Freiraum 41 gelangt, aus welchem der Übertritt über das je nach einwirkendem Druck entsprechend geöffnete Rückschlagventil 43 nach oben, also in den hier nur angedeuteten oberen Druckraum des Kolbenzylinderaggregats der Stoßdämpfereinheit erfolgt.

Erfolgt demgegenüber eine Bewegung des Kolbens 10 in der Zugrichtung, wie durch den entsprechend bezeichneten Pfeil angedeutet, dann dringt verdrängtes Druckmittel über die Kanäle 48 in den oberen Ringraum 51 des inneren Doppelventils 15 ein und tritt von dort, nunmehr den Doppelpfeilen folgend durch die erste innere Ventilöffnung - je nach Position des inneren Ventilkörpers 15a in den Querkanal 35 ein, passiert das zweite äußere Ventil entsprechend der Durchlaß-oder Queröffnung 40, gelangt in den in der Zeichenebene rechten Freiraum 42 und tritt durch das Rückschlagventil 46 aus.

Parallel zu diesen gesteuerten Druckmittelströmungen sind Ausgleichsbewegungen entsprechend den gestrichelten Pfeilverläufen über zusätzliche axiale Durchlässe 24, 25 im Kolben 10 möglich, die durch eigene Rückschlagventile 24a, 25a abgedeckt sind. Dabei wird durch die Steuerung der aktiven Dämpfungskraftkomponente auf Aufbaubewegungen im mittleren Frequenzbereich reagiert, während die einstellbare passive Dämpfungskraftkomponente eine allmähliche, also langsamer verlaufende Adaption des Dämpfungsverhaltens ermöglicht; gegebenenfalls auch Umschaltungen zwischen verschiedenen passiven Dämpfungskräften ermöglicht durch entsprechende Schalterbetätigung.

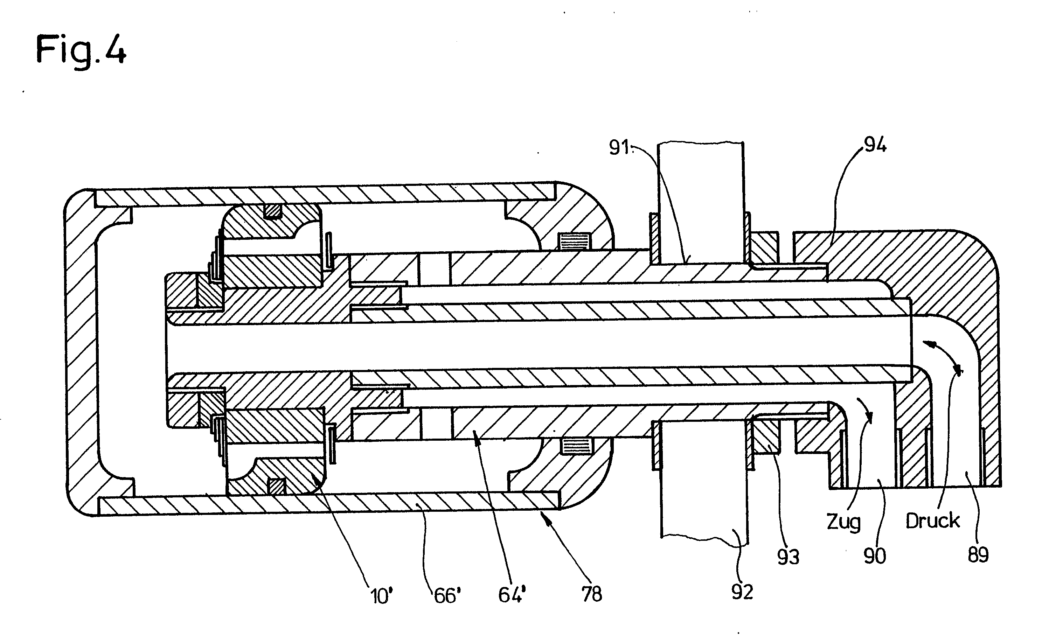

In Fig. 2 ist eine schematische Funktionsskizze eines Ventilbereichs für die Steuerung semi-aktiver Dämpfungskräfte gezeigt, die von außen an eine stoßdämpferartige Struktur angebaut sein kann und beispielsweise in Form von Stoßdämpfern Verwendung finden kann, wie sie im folgenden noch anhand der Darstellung der Fig. 4 erläutert werden.

Das Kolbenzylinderaggregat des Stoßdämpfers ist mit 53 bezeichnet; über Verbindungsleitungen gelangt das jeweils verdrängte Druckmittel (Hydrauliköl) zur mit Bezug auf die Zug- bzw. Druckstufe symmetrisch aufgebauten Ventileinheit 54, mit den beiden Einlässen 55a, 55b. Das Druckmittel passiert für Druck- und Zugstufe getrennte, den passiven Anteil der Stoßdämpferkraft bestimmende Durchlaßöffnungen 56a, 56b eines für die Bestimmung des passiven Anteils gemeinsamen Rotationsventils 57, wobei parallel hierzu jeweils Rückschlagventile 58a, 58b angeordnet sind. Unter Beachtung der Grundkonzeption der Reihenschaltung des "passiven" und "aktiven" Ventilbereichs schließen sich an das Rotationsventil 57, wieder für Zug- und Druckstufe getrennt Tellerventile 59a, 59b an, die der Steuerung und Kontrolle der aktiven Dämpfungskrafteinstellung dienen. Diese Tellerventile 59a, 59b sind so ausgebildet, daß über Stößel 60 betätigte Ventilteller 61 Durchlaßöffnungen unter Federvorspannung abdecken, wobei die Federvorspannung von einem Flachfederensemble 62 erzeugt wird. Wie die Zeichnung zeigt, sind Flachfedern unterschiedlicher Länge so gestapelt, daß sich eine immer weichere Federwirkung ergibt, je weiter außen der Federangriffspunkt positioniert ist, etwa vergleichbar mit den Federpaketen bei Lastkraftwagen.

Da hier das Flachfederensemble 62 in der Richtung des Doppelpfeils C axial verschieblich ist, ergibt sich eine aus dieser Verschiebung resultierende, jeweils gegenteilige Federdruckwirkung auf die beiden Ventilteller; je nachdem nämlich der eine Stößel 60 stärker in den steifen Bereich der Federwirkung gelangt, umso weicher wird die Federkrafteinwirkung auf den anderen Stößel, so daß sich insgesamt durch eine Axialverschiebung des Flachfederensembles eine unsymmetrische Wirkung auf das auf diese Weise gebildete Doppelventil aus den beiden Tellerventilen 59a, 59b für die Bestimmung der aktiven Dämpfungskraftkomponente getrennt für Zug- und Druckwirkung ergibt.

Der Rückfluß erfolgt nach Passieren der Tellerventile über federvorgespannte Rückschlagventile 63a, 63b. Auch hier ist der Grundgedanke realisiert, durch Einleitung nur sehr geringer Steuerkräfte variable Durchlaßöffnungen im Ventilbereich zu erzielen (Rotationsventil 57) bzw. durch die ebenfalls rückwirkungskraftfreie Verschiebung des Flachfederensembles 62 die Vorspannungswirkungen auf die Tellerventile und damit auf deren Wirkungen unsymmetrisch auszubilden.

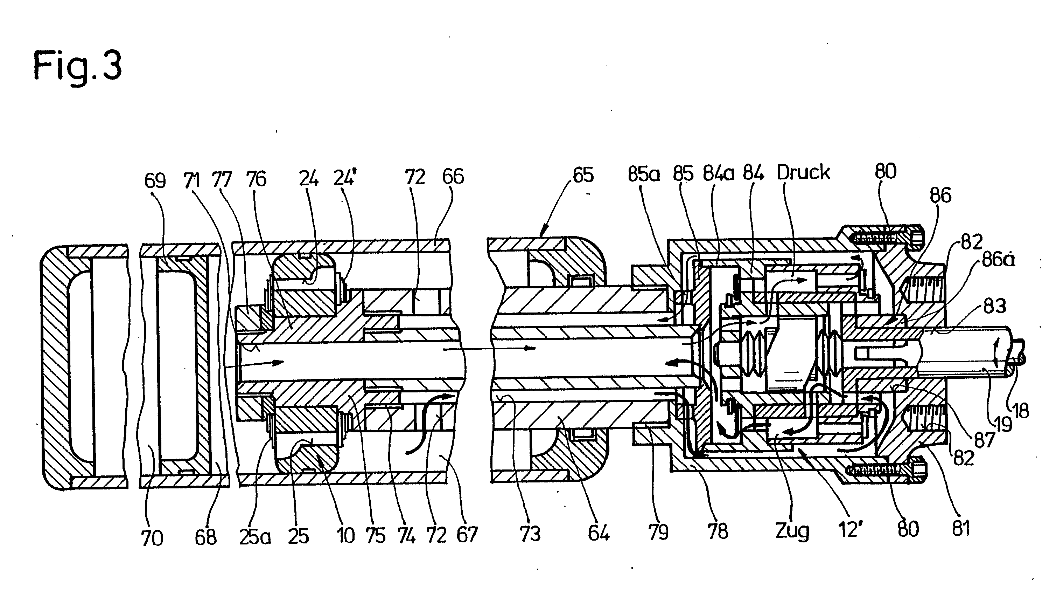

Das Ausführungsbeispiel in der Darstellung der Fig.3 unterscheidet sich in Aufbau und Funktion der Ventileinheit 12′ zu der Ausführungsform der Fig. 1 nur insofern, als hier die Ventileinheit am Ende der aus dem Zylinder/Kolbenaggregat der Stoßdämpfereinheit oder des McPherson-Federbeins herausragenden Kolbenstange 64 angeordnet ist; der Zylinder des so gebildeten McPherson-Federbeins 65 ist mit 66 bezeichnet.

Soweit die in Fig. 3 und auch in den nachfolgenden Figuren dargestellten Komponenten und Baueinheiten nach Aufbau und Funktion mit weiter vorn schon beschriebenen Teilen identisch bzw. vergleichbar sind, tragen sie das gleiche Bezugszeichen bzw. bei nur geringen Unterschieden ein mit einem Beistrich oben versehenes Bezugszeichen. Der Zylinder 66 des McPherson-Federbeins 65 in Fig. 3 bildet oberhalb des Kolbens einen Druckraum 67 und unterhalb des Kolbens einen Druckraum 68 aus; im unteren Druckraum befindet sich, durch einen eigenen kleinen Trennkolben 69 vom restlichen Druckraum abgetrennt, ein unter Druck stehendes Gas 70, wodurch sich ein Ausgleich der Mehrmenge an hydraulischem Druckmittel ergibt, wenn der Hauptkolben 10′ nach unten fährt (Druckstufe). Die den Kolben 10′ tragende Kolbenstange 64 verfügt über mehrere getrennte Längs- und Querkanäle, die für den Transport des Druckmittels zur Ventileinheit 12′ sorgen; eine zentrale, auch den Hauptkolben 10′ durchsetzende erste Bohrung 71 steht mit dem unteren Druckraum 68 in Verbindung, so daß in der Druckstufe, den einfach durchgezogenen Pfeilen folgend, das Drucköl zur Ventileinheit 12′ gelangen und dort, wie schon ausführlich in Verbindung mit der Ventileinheit der Fig. 1 erläutert, die entsprechenden, für die Erzeugung der passiven und aktiven Dämpfungskraftkomponenten betreffenden Durchlässe und Kanäle passieren kann.

In vergleichbarer Weise sind im Schaft der Kolbenstange 64 Querkanäle 72 gebildet, die mit einem oder mehreren Ringkanälen 73 in Verbindung stehen, die, den Doppelpfeilen folgend, aus dem oberen Druckraum 67 in der Zugstufe das Hydraulikmittel zur Ventileinheit 12′ befördern und den entsprechend den Anforderungen an die passiven und aktiven Dämpfungskraftkomponenten gesteuerten Durchlässen zuführen.

Der Hauptkolben 10′ selbst verfügt über die insgesamt passiv wirkenden Rückschlagventile 24a′ und 25a′ in Verbindung mit den Kolbenlängskanälen 24 und 25. Die Befestigung des Hauptkolbens 10 an der Kolbenstange 64 kann in der üblichen Weise durch Schraubverbindungen, wie sie bei 74 gezeigt sind, erfolgen; der grundsätzliche Aufbau des Kolbens ist beliebig. Er kann aus einem mit der Kolbenstange verschraubten Kolbenkern 75 bestehen, auf dem peripher eine Kolbenringform 76 sitzt, die über einen Schraubring 77 mit dem Kolbenkern 75 verschraubt ist, wobei dann auch gleich die entsprechenden Ventilringscheiben für die Rückschlagventile 24a′, 25a′ und sonstige Beilegscheiben mitverschraubt werden können.

Die am freien äußeren Kolbenende angeordnete Ventileinheit 12′ sitzt in einem eine ausgeprägte Topfform aufweisenden Trägerkopf 78, der bei 79 mit dem Ende des Kolbenschaftes verschraubt sein kann. Der Trägerkopf 78 ist abgedeckt von einem durch entsprechende Befestigungsmittel wie Schrauben 80 am Trägerkopf 78 befestigten Deckel 81, der über Schrauböffnungen 82 zur flexiblen Montage der ganzen Einheit am Aufbau des Fahrzeugs o. dgl. verfügt und eine zentrale Durchtrittsbohrung 83 aufweist, durch die die Drehwellen 18′ und 19' für die beiden Doppelventile für die Steuerung der aktiven und der passiven Dämpfungskraftkomponente geführt sind. Der sonstige Aufbau der Ventileinheit 12' ist in der Grundstruktur mit der Darstellung der Fig. 1 vergleichbar und in der Funktion identisch, wobei zur Lagerung eines unteren Hauptträgerteils 84, welches in etwa die Lagerungs-und Durchflußkanalaufgaben des unteren Gehäuseteils 14 der Fig. 1 wahrnimmt, ein plattenförmiger Ringträger 85 vorgesehen ist, der mit einem inneren Ringflansch 85a in den Bodenbereich des topfförmigen Trägerkopfes 78 eingeschraubt ist und einen nach unten wegstehenden Ringflansch 84a am Hauptträgerteil 84 aufnimmt. Hierdurch erfährt das Hauptträgerteil 84 seine Zentrierung und Lagerung und kann dann auch die restlichen Bauteile lagern und aufnehmen, wobei ein mit dem oberen Gehäuseteil 13 der Fig. 1 vergleichbares oberes Trägerteil 86 mit in etwa den gleichen Kanälen und der gleichen Grundstruktur mit einem inneren zentralen Ringflansch 86a in einer entsprechenden Paßausnehmung 77 im Dekkel 81 aufgenommen und gehalten ist.

Der Mehrmengenausgleich erfolgt bei dem McPherson-Federbein der Fig. 3 durch die Wirkung des unter Druck stehenden Gases 70 im durch den Neben- oder Hilfskolben 69 abgetrennten unteren Abteil im Zylinder 66, während bei dem Ausführungsbeispiel der Fig. 1 hierzu noch ein separater Auslaßbehälter vorgesehen sein kann.

Die Ausführungsform der Fig. 4 macht deutlich, daß auf der Grundlage der Trennung von Kolbenzylinderaggregat des Stoßdämpfers bzw. des McPherson-Federbeins in ein Kolbenzylinderaggregat 78 mit den entsprechenden, schon anhand der Darstellung der Fig.3 erläuterten Durchlaßkanälen für das hydraulische Druckmittel einerseits und in eine zu diesem McPherson-Federbein auch getrennt ausgebildete und gelagerte Ventileinheit eine Vielzahl von Realisierungsmöglichkeiten gegeben sind, wobei zu der Ventileinheit lediglich zwei hydraulische Leitungsverbindungen 89 für die Druckstufe und 90 für die Zugstufe vorgenommen werden müssen. Das Kolbenzylinderaggregat 78 kann dann so ausgebildet sein, wie im einzelnen schon im Hinblick auf die Darstellung der Fig. 3 erläutert, also auch in der Grundform der Kolbenausbildung und der Kolben und Kolbenstange durchsetzenden Kanäle identisch oder vergleichbar, mit oder ohne dem unteren separaten Druckbehälter für ein unter Druck stehendes Gas 70.

In Fig. 4 ist der Aufbau des Kolbenzylinderaggregats 78 mit Kolben 10', Zylinderanordnung 66' und Kolbenstange 64' identisch mit der Darstellung der Fig.3, so daß hierauf nicht weiter eingegangen zu werden braucht. Die herausgeführte Kolbenstange sitzt mit einer Abschulterung 91 an einem externen, stationären, sonst nicht weiter dargestellten Halteteil 92 und ist über einen Schraubring 93 fest mit diesem verbunden. Die Kolbenstange durchsetzt das Halteteil 92 und trägt an ihrem Ende einen weiterführenden Druckflansch 94 zur Aufnahme und weiterführenden Verbindung der hydraulischen Leitungsverbindung 89, 90 zur anderswo angeordneten oder auch unmittelbar angeflanschten Ventileinheit.

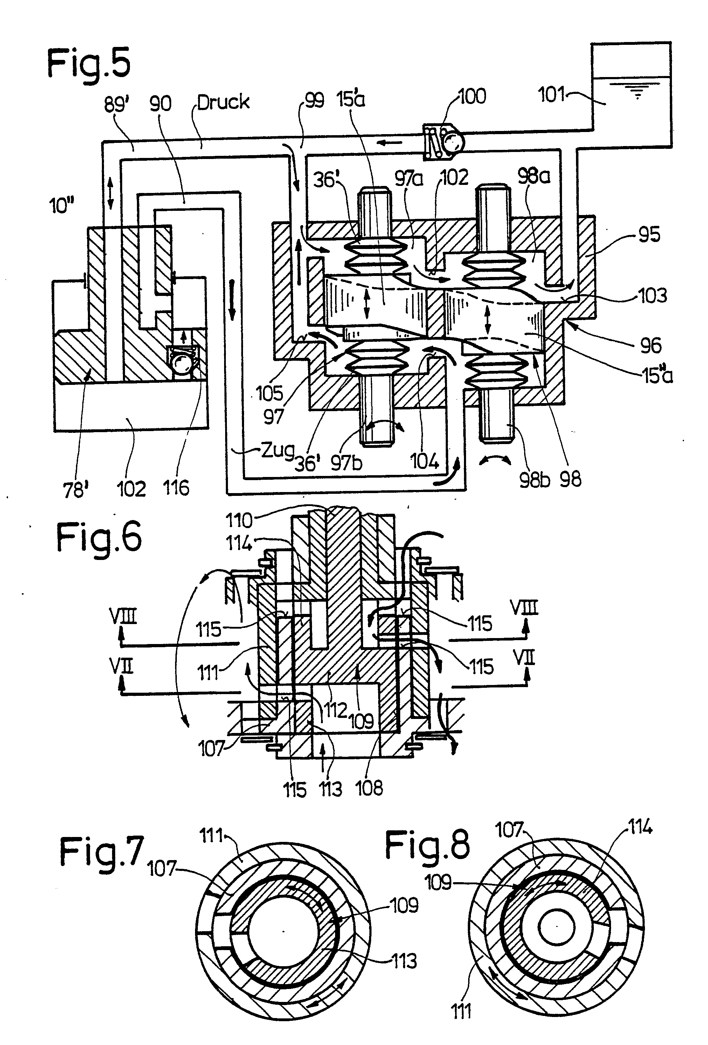

Diese Ventileinheit kann so ausgebildet sein, wie weiter vorn schon in Fig. 2 erläutert; sie kann aber auch den Aufbau und die Funktion der Ventileinheiten haben, wie sie in den Figuren 5 und 6 dargestellt sind, auf die im folgenden eingegangen wird.

In der Darstellung der Fig. 5 ist das Kolbenzylinderaggregat nur noch schematisch angedeutet und insgesamt mit 78' bezeichnet; die beiden Druckleitungen 89' und 90' führen zu einer Ventileinheit aus einem hier vorzugsweise einstückigen gehäuse 95, in welchem die für Druckstufe und Zugstufe jeweils Doppelfunktionen ausübenden Ventile für die Bestimmung der passiven sowie der aktiven Dämpfungskraftgröße hintereinander angeordnet sind und allgemein Aufbau und Funktion des jeweils inneren Doppelventils entsprechend der Darstellung der Figuren 1 und 3 aufweisen.

Die schematische Diagrammdarstellung einer Ventileinheit 96 für ein McPherson-Federbein verfügt auch hier wieder über getrennte "aktive" und "passive" Dämpfungskraftsteuerung, wobei die obere Ebene beider Ventile, also des Doppelventils 97 für die Einstellung der passiven Dämpfungskraftgröße sowie des Doppelventils 98 für die Einstellung der aktiven Dämpfungskraftgröße der Druckstufe zugeordnet ist und in etwa die Rolle eines Fußventils spielt, wobei der ausgeübte Druck auf die Kolbennettofläche wirkt, während die untere Ebene der beiden Doppelventile 97 und 98 mit dem hier wirksamen Druck auf die Kolbenringfläche wirkt.

Das Gehäuse 95 der Ventileinheit 96 umfaßt zwei hintereinandergeschaltete Kammern 97a, 98a, die jeweils Ventilkörper 15a', 15a'' aufnehmen von der Form und Funktion, wie sie bei 15a in Fig. 1 ausführlich erläutert und beschrieben sind, so daß in diesem Zusammenhang nicht mehr ausführlich hierauf eingegangen zu werden braucht. Jeder Ventilkörper 15a', 15a'' ist beidseitig über die schon erwähnten Tellerfedern 36' auf einer eigenen Drehwelle 97b, 98b gelagert, die beidseitig Bohrungen in den Wänden der Kammern 97a, 98a durchsetzen und daher von außen angetrieben werden können. Beide Doppelventilkörper 15a', 15a'' decken in unterschiedlichen Höhen jeweils vollkommen voneinander getrennte Hydraulikölpassagen ab bzw. bilden mit diesen entsprechend den jeweils eingenommenen Drehpositionen veränderbare Ventildurchlässe für Druckstufe (einfach durchgezogene Pfeile) und Zugstufe (Doppelpfeile), die hintereinander geschaltet sind. Die hydraulische Leitungsverbindung 89' für die Druckstufe weist eine Leitungsverzweigung bei 99 auf, die über ein in dieser Richtung sperrendes Rückschlagventil 100 mit einem Druckmittelausgleichsbehälter 101 verbunden ist. Der Ausgleichsbehälter 101 dient der Aufnahme der Mehrmenge, wenn sich der Kolben 10'' des Zylinderkolbenaggregats eines entsprechenden McPherson-Federbeins oder einer vergleichbaren Stoßdämpferanordnung nach unten bewegt; in diesem Fall durchfließt das Hydrauliköl zunächst eine erste, durch die Oberkante des Ventilkörpers 15a' gesteuerte Ventilöffnung 102 des ersten Doppelventils 97 und anschließend eine zweite Ventilöffnung 103 des nachgeschalteten zweiten Doppelventils 98 zum externen Reservoir 101, welches über die Zweigleitung über das Rückschlagventil 100 in den unteren Druckraum 102 des Kolbenzylinderaggregats 78' geöffnet ist.

Die hydraulische Leitungsverbindung 90' für die Zugstufe trifft auf eine erste Ventilöffnung 104, gesteuert von der unteren Randkante des Ventilkörpers 15a'' und anschließend auf eine weitere Ventilöffnung 105, gesteuert von der unteren Randkante des Ventilkörpers 15a'. Es versteht sich, daß die Leitungsführung auch unterschiedlich sein kann, nämlich so, wie bei den Ausführungsbeispielen der Figuren 1-4 erläutert, wobei dann auf einen Druckausgleichsbehälter 101 auch verzichtet werden kann. Im vorliegenden Fall ergeben sich hintereinander geschaltete Zugventile (Ventilöffnungen 104, 105) und hintereinandergeschaltete Druckventile (Ventilöffnungen 102 und 103), die der Einleitung der aktiven und passiven Dämpfungskraftgrößen dienen, wobei je nach Wunsch auch Queröffnungen zwischen den einzelnen Ventilbereichen für Druck- und Zugstufe möglich sind.

Das in Fig. 6 dargestellte Ausführungsbeispiel ergänzt als alternative Realisierungsform die Möglichkeiten der Hintereinanderschaltung von (Doppel)-Ventilen für die Einleitung bzw. Bestimmung der passiven und aktiven Dämpfungskraftkomponenten entsprechend den Ausführungsbeispielen der Figuren 1-4 bzw. 5, jedoch hier in konzentrischer Anordnung der Ventile, wobei die Doppelventilfunktion durch Verteilung auf unterschiedliche axiale Positionen realisiert wird. In der Grundfunktion arbeitet die Ventileinheit 106 der Fig. 6, die ohne umgebende weitere Komponenten dargestellt ist und daher sowohl im Kolben, aber auch in einem gesonderten Kopfteil an einem Kolbenstangenende eines Stoßdämpfers oder eines McPherson-Federbeins angeordnet werden kann, so, wie in Fig. 1 erläutert.

Im einzelnen ist zunächst eine stationäre mittlere tragende zylindrische Ringstruktur 107 vorgesehen, die in einer inneren zylindrischen Bohrung 108 ein erstes Ventilkörper-Drehteil 109 aufnimmt, welches in eine erste zentrale innere Dreh- oder Betätigungsachse 110 übergeht, für die Einleitung der für die aktive Dämpfungskraftbestimmung erforderlichen Steuergrößen.

Wie auch bei dem Ausführungsbeispiel der Fig. 1 -dort die äußere topfartige Ventilkörperstruktur 38 - sind hier drei konzentrisch ineinandergreifende zylindrische Ringwandstrukturen gebildet, mit der mittleren stationären Ringstruktur 107, wobei jeweils Querkanalöffnungen in allen drei Wandstrukturen durch entsprechendes Verdrehen mehr oder weniger im Sinne eines ventilartigen Absperrens oder Öffnens aufeinander ausgerichtet werden können, so daß sich schließlich wieder die Durchtritts- und Flußstrukturen entsprechend den einfach und doppelt gezeichneten Pfeilen ergeben, wie sie auch bei den anderen Arten der dargestellten Ventileinheiten anzutreffen sind.

Hierbei verdeutlichen die Schnittdarstellungen in den Figuren 7 und 8 die jeweiligen Möglichkeiten der relativen Winkelpositionierung der einzelnen zylindrischen Ringstrukturen zueinander, wobei die innere Ringstruktur, also das Ventilkörper-Drehteil 109 der Bestimmung der aktiven Dämpfungsgrößen und ein äußeres Ventilkörper-Drehteil 111 der Bestimmung der passiven Dämpfungsgrößen dient. Im einzelnen verfügt das innere Ventilkörperdruckteil 109 über von einer mittleren Grundplatte 112 ausgehend nach unten und oben weisende topfartige Ringvorsprünge 113, 114, die oben und unten über verschiedene, hier nicht im einzelnen bezeichnete Querdurchlässe verfügen, so daß sich die übliche Doppelventilfunktion ergibt. Diese Querdurchlässe können mehr oder weniger fluchtend auf stationäre Querdurchlässe 115 in der stationären mittleren Ringstruktur eingestellt werden. In ähnlicher Weise verfügt die allgemein topfförmige Grundform des äußeren Ventilkörper-Drehteils 111 in der äußeren zylindrischen Wandung über Querdurchlässe, die dann die Reihenschaltung der Ventilöffnungen vervollständigen.

Alle in der Beschreibung, den nachfolgenden Ansprüchen und der Zeichnung dargestellten Merkmale können sowohl einzeln als auch in beliebiger Kombination miteinander erfindungswesentlich sein.

**Ansprüche**

1. Vorrichtung zur Dämpfung federnder Rad-Aufhängungssysteme bei Fahrzeugen, Straßenfahrzeugen, Bussen, Bahnen u. dgl., mit einem Kolben/Zylinderaggregat, bei dem Zylinder und Kolben jeweils mit Aufbau bzw. Rad/Achse des Fahrzeugs verbunden sind und momentane, dynamischen Fahrbedingungen entsprechende Signale von Sensoren erfaßt werden und zur Durchfluß-steuerung mindestens eines Dämpferventils die-nen, wobei die jeweils wirksame Dämpfungskraft so gesteuert ist, daß sich passive und aktive Dämpfungskraftkomponenten ergeben und dann, wenn aufgrund des momentanen Bewegungsablaufs eine äußere Energiezuführung erforderlich ist, die bestehende Dämpfungskraft im wesentlichen zu Null gemacht wird (semi-aktive Dämpfung), wobei für Zug-und Druckstufe getrennte Einflußmöglichkeiten auf das gesteuerte Druckmittel vorgesehen sind, dadurch gekennzeichnet, daß das mindestens eine Dämpferventil aus der Reihenschaltung von zwei getrennten Ventilen (15, 16; 57, 59a, 59b; 97, 98) jeweils für jede Bewegungsrichtung - (Zug/Druckstufe) besteht, wobei bei dann insgesamt vier vorhandenen Ventilen sowohl in der Zug- als auch in der Druckstufe jeweils ein den aktiven Dämpfungsanteil bestimmendes Ventil und ein mit diesem in Reihe liegendes, den passiven Dämpfungsanteil bestimmendes Ventil angeordnet sind und daß die beiden Ventile für den passiven und die beiden Ventile für den aktiven Dämpfungsanteil jeweils von außen verstellbar sind.

2. Vorrichtung nach Anspruch 1, dadurch gekennzeichnet, daß mindestens eines der Doppelventile (15; 15a′, 15a″) ein Rotationsventil mit einem in seiner Höhe veränderlichen Zylindermantel ist und daß der den höhenmodulierten Zylindermantel tragende Ventilkörper (15a) axial federnd und daher auch in der axialen Richtung aufgrund einwirkender Drücke verschieblich gelagert ist.

3. Vorrichtung nach Anspruch 1 oder 2, dadurch gekennzeichnet, daß die höhenmodulierte Zylinderwandung des inneren Ventilkörpers (15a; 15a′, 15a″) des zentralen inneren Rotationsventils (15) bündig in einer Bohrung (30) eines Lagerteils (unteres Gehäuseteil 14; Hauptträgerteil 84) sitzt, in welchem Querkanäle (34, 35; 102, 103, 104, 105) zusammen mit den Ventilkörpern in ihrem Querschnitt veränderbare Durchlaßventile bilden.

4. Vorrichtung nach einem der Ansprüche 1-3, dadurch gekennzeichnet, daß sich an die Querkanäle (34, 35) im stationären, von einem unteren Gehäuseteil (14) gebildeten Lagerteil für den inneren Ventilkörper (15a) nach außen weitere und damit in Reihe mit den inneren Ventilen geschaltete äußere Ventile bildende Querkanäle (39, 40) eines äußeren topfartigen zweiten Ventilkörpers (38) anschließen, der ebenfalls drehbar gelagert ist und daß der innere Ventilkörper für die Bestimmung der aktiven Dämpfungskraftkomponenten und der äußere Ventilkörper für die Bestimmung der passiven Dämpfungskraftkomponenten vorgesehen ist (Fig. 1).

5. Vorrichtung nach einem der Ansprüche 1-5, dadurch gekennzeichnet, daß parallel zu den durch die beiden Doppelventile für Zug- und Druckstufe gebildeten, hintereinander geschalteten ventilartigen Durchlaßöffnungen Rückschlagventile (24a, 25a) vorgesehen sind und daß die ganze Ventileinheit (12) im Kolben einer stoßdämpferartigen Struktur angeordnet ist, wobei der hohle Kolbenschaft der Durchführung der Drehwellen (18, 19) für die Verstellung des inneren sowie des äußeren Ventilkörpers (15a, 38) dient (Fig. 1, Fig. 3).

6. Vorrichtung nach einem oder mehreren der Ansprüche 1-5, dadurch gekennzeichnet, daß der die Ventileinheit (12) aufnehmende Kolben (10) aus einem oberen und einem unteren Gehäuseteil (13, 14) gebildet ist, die ineinandergefügt in Strömungs-richtung hinter den hintereinandergeschalteten vari-ablen Ventildurchlaßöffnungen liegende Freiräume (41, 42) bilden, aus denen das hydraulische Druckmittel (Hydrauliköl) über Rückschlagventile (43, 44, 45, 46) in den jeweiligen oberen bzw. unteren, durch den Kolben (10) jeweils getrennten Druckraum des Stoßdämpfers oder McPherson-Federbeins fließt.

7. Vorrichtung nach Anspruch 6, dadurch gekennzeichnet, daß die Rückschlagventile von Ringblenden gebildet sind, die die Freiräume (41, 42) abdecken und von mit oberem bzw. unterem Gehäuseteil verschraubten Spannringen (47) gehalten sind.

8. Vorrichtung nach einem der Ansprüche 1-7, dadurch gekennzeichnet, daß der innere Ventilkörper (15a) mit höhenmodulierter Mantelkonfiguration axial zwischen Tellerfedern (36) verschieblich gehalten ist und daß die Übergänge von einer höheren Zylindermantelkante zu einer niedrigeren, die jeweiligen stationären Querkanäle (34, 35) freigebenden Position längs einer sich stetig und allmählich ändernden Kurvenform verlaufen.

9. Vorrichtung nach Anspruch 1, dadurch ge-kennzeichnet, daß eine zum Kolbenzylinderaggre-gat (53; 78′) getrennt montierbare und mit diesem über hydraulische Leitungsverbindungen (89′, 90′) verbundene Ventileinheit (54, 96, 106) vorgesehen ist, wobei das Kolbenzylinderaggregat ein Stoßdämpfer oder ein McPherson-Federbein ist (Fig. 2, Fig. 5, Fig. 6).

10. Vorrichtung nach einem der Ansprüche 1-9, dadurch gekennzeichnet, daß die Ventileinheit (54) ein erstes, durch eine Drehbewegung betätigbares Rotationsventil (57) aufweist, welches diametral gegenüberliegend Durchlaßöffnungen mit stationären Gehäusekanälen bildet jeweils für die von der Druckstufe und der Zugstufe kommenden hydraulischen Leitungsverbindungen und daß diesen, der Bestimmung der aktiven Dämpfungskraft dienen-den, gesteuerten Durchlaßöffnungen jeweils ge-trennt unter Federvorspannung stehende, schnell schaltbare Tellerventile (59a, 59b) nachgeschaltet sind zur Bestimmung des passiven Dämpfungskraftanteils (Fig.2).

11. Vorrichtung nach Anspruch 10, dadurch gekennzeichnet, daß den Rotationsventil-Öffnungen (56a, 56b) Rückschlagventile (58a, 58b) parallel geschaltet sind, daß die Tellerventile (59a, 59b) über ein in Querrichtung verschiebbares, geschichtetes Blattfederensemble (62) mit gegenläufig unterschiedlichen Federsteifigkeiten (hart - weich) auf ihren Sitz gepreßt sind und daß die hinter den Tellerventilen (59a, 59b) liegenden Räume über weitere Rückschlagventile (63a, 63b) mit den Einlaßanschlußöffnungen (55a, 55b) verbunden sind (Fig.2).

12. Vorrichtung nach einem oder mehreren der Ansprüche 1- , dadurch gekennzeichnet, daß die Ventileinheit (12') außerhalb des Kolbenzylinderaggregats (65) als gesondertes Kopfteil am Ende der Kolbenstange (64) befestigt ist und die hydraulischen Verbindungsleitungen (71, 72) von Längs- und Querkanälen in der hohlen Kolbenstange (64) gebildet sind (Fig. 3).

13. Vorrichtung nach Anspruch 12, dadurch gekennzeichnet, daß der Trägerkopf (78) für die Ventileinheit (12') am freien Ende der Kolbenstange (64) aus einem topfförmigen, die Ventileinheit (12') aufnehmenden und längs seiner Wandung hydraulische Verbindungsleitungen bildenden Gehäuseteil und einem Deckel (81) für diesen besteht, durch welchen nach oben die Drehachsen (18', 19') für die Verstellung des inneren Ventilkörpers (15a) und des äußeren Ventilkörpers (38) konzentrisch geführt sind, wobei der Trägerkopf (78) stationär am Aufbau befestigt ist (Fig. 3).

14. Vorrichtung nach Anspruch 13, dadurch gekennzeichnet, daß im unteren Teil des den Kolben mit axialen, über Rückschlagventile (24a', 25a') verschlossenen Durchlaßkanälen (24, 25) aufnehmende Zylinder (66) ein ein Druckgas enthaltender und über einen verschieblichen Hilfskolben (69) abgeschlossener Raum gebildet ist (Fig. 3).

15. Vorrichtung nach einem der Ansprüche 1- 14, dadurch gekennzeichnet, daß die hohle, die hydraulischen Leitungsverbindungen (89, 90) zur separat montierten Ventileinheit (54, 96, 106) enthaltende Kolbenstange (64') mit ihrem freien Ende am Aufbau (92) befestigt ist und einen die hydraulischen Verbindungsleitungen aufnehmenden Anschlußflansch (94) aufweist.

16. Vorrichtung nach einem oder mehreren der Ansprüche 1-15, dadurch gekennzeichnet, daß zwei eine höhenmodulierte Zylindermantelform aufweisende Doppelventile (97, 98) in einem Ventilgehäuse (95) hintereinandergeschaltet sind und für Druck- und Zugstufe getrennte hydraulische Leitungskanäle bilden, wobei die beidseitig im Ventilgehäuse über Drehachsen (97b, 98b) gelagerten jeweiligen Doppelventile (97, 98) nach oben und nach unten mit sie umgebenden Querdurchlässen des sie aufnehmenden Gehäuses (95) entsprechend in ihrem Querschnitt gesteuerte Ventilöffnungen bilden, wobei im Bereich der hydraulischen Leitungsverbindung (98') für die Druckstufe ein Druckmittel aufnehmender Speicher- bzw. Ausgleichsbehälter (101) vorgesehen ist, dessen Rückfluß zum Druckraum (102) über ein in dieser Richtung öffnendes Rückschlagventil (100) gebildet ist (Fig. 5).

17. Vorrichtung nach Anspruch 16, dadurch gekennzeichnet, daß im Kolben (10") mindestens ein vom unteren Druckraum (102) in den oberen, durch die Kolbenstange volumenreduzierten Druckraum öffnendes Rückschlagventil (116) zum Mehrmengenausgleich angeordnet ist, daß die mit der Druckstufe verbundenen Ventilöffnungen nach Art eines Fußventils und die mit der Zugstufe verbundenen Ventilöffnungen der beiden Doppelventile (87, 98) nach Art eines Kolbenventils ausgebildet sind, wobei das eine Doppelventil der Bestimmung der passiven und das andere Doppelventil der Bestimmung der aktiven Dämpfungseinflußgrößen dient (Fig.5).

18. Vorrichtung nach einem der Ansprüche 1- 17, dadurch gekennzeichnet, daß bei konzentrisch zueinander angeordneten Doppelventilen eine innere, in ihrer Drehposition von außen gesteuerte Zylinderringwandung axial versetzt das erste Doppelventil durch entsprechende Fluchtung von Querkanälen mit Querkanälen in einer stationären Ringstruktur bildet und daß sich daran nach außen ein weiterer, in seiner Drehposition durch äußeren Steuereingriff bestimmbarer Ventilkörper-Drehteil mit seiner Zylinderringwandung anschließt, dessen Querkanaldurchtrittsöffnungen ebenfalls, je nach Drehposition mehr oder weniger mit den Querkanälen in der stationären Ringstruktur (107) fluchten (Fig. 6, Fig. 7, Fig. 8).

# Fig.1

# Fig.2

# Fig.3

EP 0 355 357 A2

# Fig.4

EP 0 355 357 A2

## Fig.5

89'  90  Druck  99  15'a  100  101

10"

36'  97a  102  98a  95

103

96

15"a

105  97

Zug  36'  97b  104  98b  98

78'  102  116

## Fig.6

110  114

VIII  VIII

115  115

VII  VII

111  115

112  109

107

115  113  108

## Fig.7
107  111  109  113

## Fig.8
107  114  109  111